# EUROPEAN PATENT SPECIFICATION

(11) **EP 2 371 084 B1**
(45) Date of publication and mention of the grant of the patent: **30.03.2016**
(21) Application number: 09832770.3
(22) Date of filing: 14.12.2009
(51) Int. Cl.: G06F 21/83, G06F 21/84, G06F 21/85, G06F 21/31

(54) **SYSTEM, DEVICE AND METHOD FOR SECURE PROVISION OF KEY CREDENTIAL INFORMATION**
SYSTEM, VORRICHTUNG UND VERFAHREN ZUR SICHEREN BEREITSTELLUNG VON SCHLÜSSELAUTHENTIFIZIERUNGSINFORMATIONEN
SYSTÈME, DISPOSITIF ET PROCÉDÉ DE FOURNITURE SÉCURISÉE D'INFORMATIONS DE JUSTIFICATIF D'IDENTITÉ À CLEF

(30) Priority: 18.12.2008 CA 2650163
(43) Date of publication of application: 05.10.2011
(73) Proprietor: McAlear, James A., Ottawa, Ontario K2C 4J3 (CA)
(72) Inventor: McAlear, James A., Ottawa, Ontario K2C 4J3 (CA)
(74) Representative: Liebetanz, Michael
(86) International application number: PCT/CA2009/001832
(87) International publication number: WO 2010/069056

(56) References cited:
- EP-A2- 1 796 052
- WO-A1-97/46931
- WO-A1-2006/089710
- FR-A1- 2 850 772
- US-A- 5 822 435
- US-A1- 2007 180 505
- US-A1- 2007 241 182

## Description

### FIELD OF THE INVENTION

The present invention relates to computer networking, and more particularly to a system for secure provision of key credential information to a server via an un-trusted computer.

### BACKGROUND OF THE INVENTION

Commerce over the Internet has become very popular. Such commerce takes many forms, from purchasing merchandize from online vendors to conducting online banking and stock trading. Common to all such transactions is the need to transmit private secure information. Typically, the transactions are carried out using secure encrypted connections. However, there are still opportunities to capture the private information that is used during online transactions, for example, to obtain passwords, Personal Identification Numbers (PIN), social security numbers, driver's license numbers and account numbers, to name a few. Illegal procurement of such information and using the same in a fraudulent manner is commonly referred to as identity theft.

While the Internet is by far the largest and most pervasive computer network, the problem of identity theft occurs in other networks as well. For example, identity theft can occur entirely within the confines of a corporate network or a university network wherein a dishonest individual uses a transaction within the network to steal PINs enabling access to confidential information.

Many of the current security mechanisms assume that a user's computer and its keyboard are secure, which is incorrect. One form of conducting online identity theft is to use a keystroke logger to log individual keystrokes for extracting personal information. The keystroke logger is, for example, software installed on a computer without the user's knowledge and its operation is invisible to the user. The keystroke logger in the form of software is, for example, distributed and installed remotely - for example, in the form of malware - and transmits the key logs to a remote computer in an invisible fashion. Numerous anti-virus programs fight known malicious software programs and try to keep up with the proliferation of new malicious software programs.

It is desirable to provide a system for secure provision of key credential information to a server via an un-trusted computer.

It is also desirable to provide a system for secure provision of key credential information that is easily installed in an existing computer system.

FR 2,850,772 relates to an electronic transaction securing device for use in electronic commerce, comprising an analyzing unit to retransmit intercepted signals to a processing unit without modification if they are not in order of passage in secured mode. The intercepted signals arising from a control unit are analyzed in a transparent mode to find an order of passage in a secured mode. The analyzing unit retransmits the signals to a processing unit of a mobile telephone without modification if they are not in an order in the secured mode. A display window displays information in a secured mode in a non-modifiable manner. The signals transmitted between the processing unit and the peripheral display units are intercepted by a connecting unit that is connected to a part of the peripheral display units.

### SUMMARY OF THE INVENTION

Accordingly, one object of the present invention is to provide a system for secure provision of key credential information to a server via an un-trusted computer.

Another object of the present invention is to provide a system for secure provision of key credential information that is easily installed in an existing computer system.

According to one aspect of the present invention, there is provided a system for secure provision of key credential information. The system comprises secure logic circuitry for being disposed in a host computer. The secure logic circuitry detects a message received from a remote computer connected to the host computer which is indicative of a request for provision of the key credential information; generates a message for prompting a user for provision of the key credential information; receives the key credential information; and provides the key credential information to the remote computer absent processing using circuitry of the host computer. The system further comprises a secure user interface connected to the secure logic circuitry for receiving the key credential information from the user and providing the same to the secure logic circuitry.

According to another aspect of the present invention, there is further provided a method for secure provision of key credential information. Using a secure logic circuitry disposed in a host computer, a message received from a remote computer connected to the host computer which is indicative of a request for provision of the key credential information is detected. Using the secure logic circuitry, a message prompting a user for providing the key credential information is generated. Using a secure user interface connected to the secure logic circuitry, the key credential information is received from the user and provided to the secure logic circuitry. Using the secure logic circuitry, the key credential information is provided to the remote computer absent processing using circuitry of the host computer.

The advantage of the present invention is that it provides a system for secure provision of key credential information to a server via an un-trusted computer.

A further advantage of the present invention is that it provides a system for secure provision of key credential information that is easily installed in an existing computer system.

### BRIEF DESCRIPTION OF THE DRAWINGS

A preferred embodiment of the present invention is described below with reference to the accompanying drawings, in which:
Figures 1A and 1B are simplified block diagrams of a system for secure provision of key credential information according to a preferred embodiment of the present invention; and,
Figure 2 is a simplified flow diagram of a method for secure provision of key credential information according to a preferred embodiment of the present invention.

### DESCRIPTION OF THE PREFERRED EMBODIMENT

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are now described.

While the description of the preferred embodiments herein below is with reference to an Internet connection for sake of simplicity, it will become evident to those skilled in the art that the embodiments of the invention are not limited thereto, but are also applicable for use with various other networks such as, for example, corporate networks or university networks.

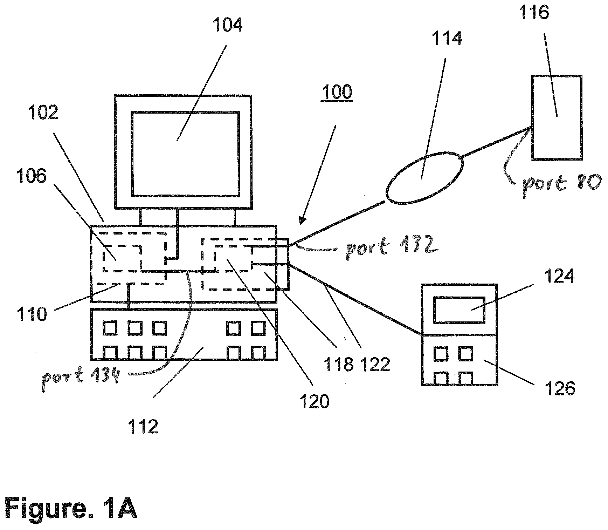

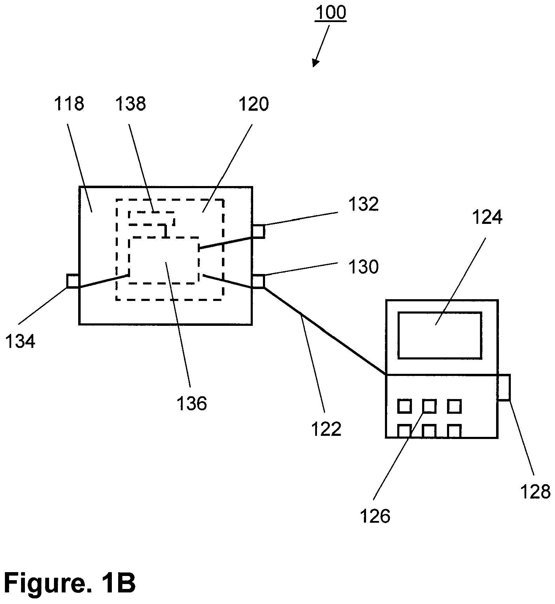

Referring to Figures 1A and 1B, a system 100 for secure provision of key credential information according to a preferred embodiment of the invention is provided. A user's Personal Computer (PC) or workstation 102 is connected via a communication network 114 such as, for example, the Internet, to a remote computer 116, for example, a server of an Internet based booking center or vendor. Typically, computers such as PCs and workstations communicate with the communication network 114 via a Network Interface Card (NIC) 118 which is connected to a motherboard 110 comprising a Central Processing Unit (CPU) 106 via an internal bus system. The user typically interacts with the computer 102 using key board 112 for providing information and commands to the CPU 106 and monitor 104 for visually receiving information, for example, in a graphical fashion.

The system for secure provision of key credential information 100 enables a user to communicate key credential information to the server 116 such that a malware having, for example, a surreptitious key logger capability, resident in the computer's CPU 106 or motherboard 110 is not able to see the provided key credential information.

The system 100 for secure provision of key credential information preferably comprises a NIC 118 having secure logic circuitry 120 connected to ports 130, 132, and 134. The ports 132 and 134 are connected to the communication network 114 and the internal bus system of the computer 102, respectively. The secure logic circuitry 120 comprises, for example, a processor 136 and memory 138 having executable commands stored therein for execution on the processor 136. The secure logic circuitry 120 scans messages received from the server 116 for detecting a message which is indicative of a request for provision of the key credential information. Typically, when a user attempts to invoke a service on a remote network resource, the server then sends a request for credentials message to the computer 102. For example, in conventional web browsing operations the CPU 106 of the computer 102 sends a HTTP GET message to the server 116 specifying a server resource and the server 116 replies with a HTTP 401 Authorization Required message with an embedded realm-title such as "Some-Service Login" to alert the user to exactly which set of key credentials are required for the requested resource.

When the secure logic circuitry 120 encounters a "request for key credentials" message the request is not passed to the computer motherboard 110 - as is done using conventional technology-but instead is passed to a secure user interface 124, 126 connected to the secure logic circuitry 120 via the port 130. The secure user interface comprises, for example, a secure keyboard 126 for receiving the key credential information from the user and a secure display 124 for displaying a message for prompting the user for provision of the key credential information. Alternatively, the secure user interface comprises a touch screen. The secure user interface is deployed, for example, as a peripheral device connected to the port 130 via cable 122. Alternatively, wireless communication is enabled between the secure logic circuitry 120 and the secure user interface 124, 126 using, for example, RF or infrared signal transmission techniques. For example, for common web browsing the secure logic circuitry 120 scans for messages coming from remote port 80 that contain the HTTP 401 message. More generally, a dedicated internet protocol is used to handle credentials for more general services or the secure logic circuitry 120 scans for authentication for each type of internet protocol, e.g. POP on port 132. The secure logic circuitry 120 generates a message for prompting the user for provision of the key credential information which is then transmitted to the secure display 124 for alerting the user. Optionally, an audio alert is generated using, for example, a loudspeaker disposed in the secure user interface. For example, for a common web browsing situation, the secure display shows the embedded realm title such as "Some-Service Login".

Optionally, the secure logic circuitry interrupts communication between the keyboard 112 and the motherboard, for example, simultaneously when the message for prompting the user for provision of the key credential information is displayed.

Optionally, secure keyboard 126 can be enhanced with a second non-secured keyboard-to-PC connection link (not shown) that can transmit keystrokes from the secure keyboard 126 to the PC motherboard 110 in a non-secure mode, this optional secure keyboard 126 additionally having a user-activatable switch 128 that, when activated, temporarily blocks future transmission via the second non-secured keyboard-to-PC connection link to halt any typed keystrokes provided from the keyboard from reaching the motherboard 110, and when activated, additionally temporarily allowing future transmission of data from the secure keyboard 126 to the NIC 118 via cable 122 or such other manner known to a person skilled in the art. This eliminates the requirement for the PC user to have separate secure and non-secure keyboards.

The user enters the required key credential information which is then sent to the secure logic circuitry 120 via cable 122. Upon receipt, the secure logic circuitry 120 provides the key credential information to the remote computer 116 absent processing using the motherboard 110, for example, by generating a reply message with the key credential information contained therein. Once the key credential information has been received, conventional communication and operation proceeds. For the common web browsing situation the secure logic circuitry 120 additionally keeps track of outgoing HTTP GET requests, because within the HTTP protocol, an authorization message is supplied by retrying the original HTTP GET request with an additional Authorization field added that contains the key credential information.

As is evident, there are numerous variants for coding the key credential information. For example, the HTTP protocol defines a low security Basic mode, where the key credential information is transmitted over the network using a base-64 transfer encoding. HTTP also includes a Digest based authentication mechanism, whereby the HTTP 401 message also contains a one-time unique server supplied "salt" value. In this authentication technique, the authentication reply is a specified hash computation of the user key credential information and the "salt" value, for which the server evaluates the correctness. Using this technique, a network based eavesdropper is not able to recover the key credential information. Of course, there are numerous other methods for encoding the key credential information using various encryption techniques. The secure logic circuitry 120 is adaptable to perform these various encoding techniques in a straightforward manner.

The system for secure provision of key credential information 100 is easily installed, for example, in the form of a NIC, into an existing insertion slot of a computer such as a PC or workstation with the secure user interface being connected thereto, allowing retrofitting of existing computer systems in a simple fashion.

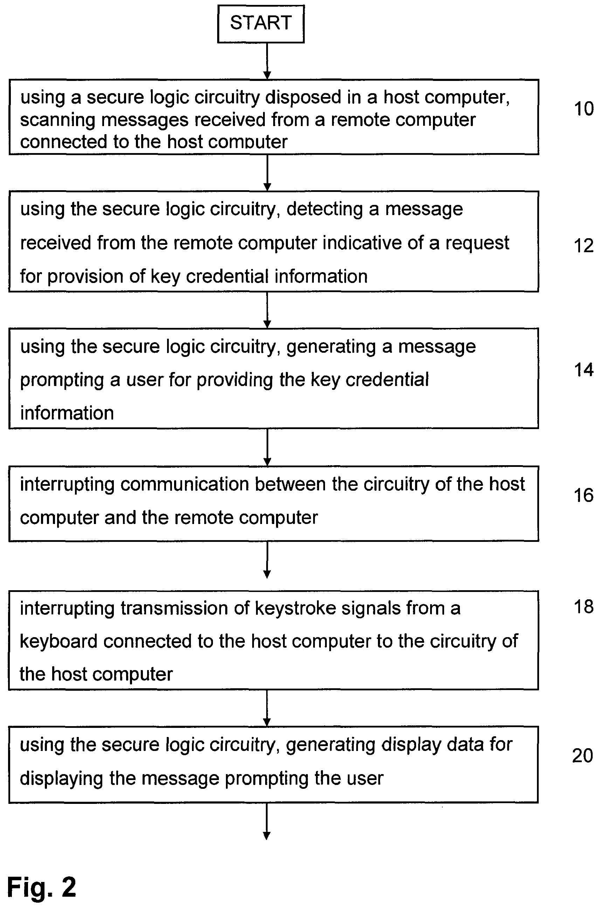

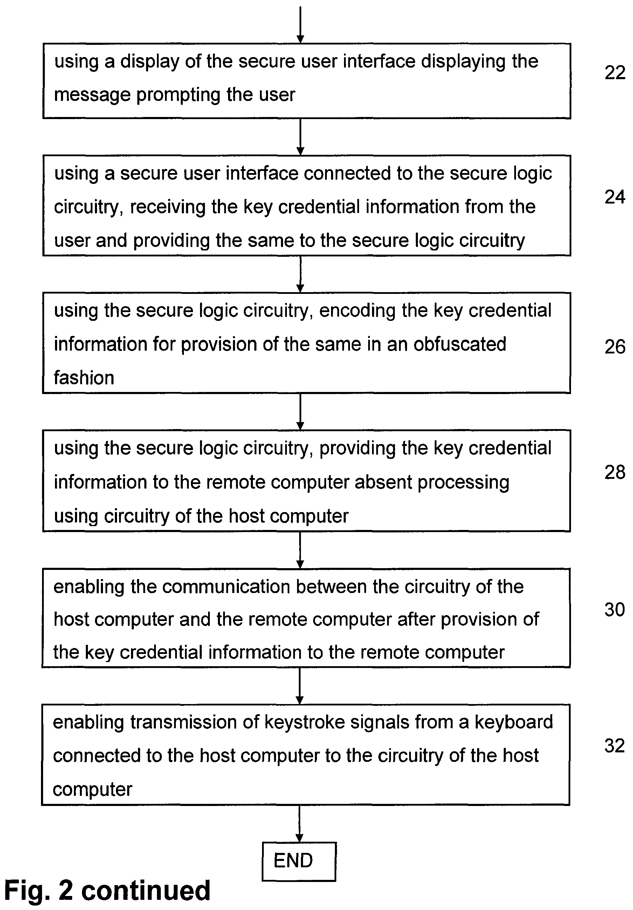

Referring to Figure 2, a simplified flow diagram of a method for secure provision of key credential information according to a preferred embodiment of the invention is provided. The method is implemented using the system 100 described above. At 10, using the secure logic circuitry 120 disposed in the host computer 102 messages received from the remote computer 116 are scanned for detecting -12 - a message received from the remote computer 116 which is indicative of a request for provision of key credential information. Upon detection of the message, the secure logic circuitry generates a message prompting a user for providing the key credential information -14. Optionally, the secure logic circuitry interrupts -16-communication between circuitry 110 of the host computer 102 and the remote computer 116 to increase security. At 18, transmission of keystroke signals to the circuitry 110 of the host computer 102 from a keyboard 112 connected to the host computer 102 is interrupted. The interruption is performed, for example, when a same keyboard connected to the motherboard 110 and to the secure logic circuitry 120 is used. For example, the user presses a toggle switch disposed on the keyboard prior to provision of the key credential information. Alternatively, the interruption is performed automatically, using the secure logic circuitry 120. Optionally, the interruption is also performed when two separate keyboards or a touch screen are employed to prevent accidental use of the keyboard connected to the motherboard 110 for provision of the key credential information by the user.

At 20, the secure logic circuitry generates display data for displaying the message prompting the user which is then displayed - 22- using the secure display 124. Using the secure user interface connected to the secure logic circuitry 120, the key credential information is received from the user and provided to the secure logic circuitry 120, at 24. Using the secure logic circuitry 120, the key credential information is encoded - 26 - using one of various available encoding techniques for providing the key credential information in an obfuscated fashion. The secure logic circuitry 120 then sends - 28 - the key credential information to the remote computer 116 absent processing using circuitry 110 of the host computer 102.

After provision of the key credential information to the remote computer 116 communication between the circuitry 110 of the host computer 102 and the remote computer 116 is enabled - 30 - as well as transmission of keystroke signals from the keyboard to the circuitry 110 of the host computer 102, at 32.

It is understood that in the preferred embodiment of the present invention, the NIC of the present invention would not incorporate or utilize a conventional packet sniffer function that would capture the secure credential packets being transmitted therethrough (to mitigate the risk that malware could locate and acquire such data from the NIC).

It is also understood that, in the case of a laptop computer, a NIC of the present invention may be provided which is physically separate from, and connectable to the laptop by way of, for example, a USB port or other interface on the laptop, in a manner known to a person skilled in art (network access to and from laptop thereafter being provided by way of the NIC of the present invention).

The present invention has been described herein with regard to preferred embodiments. However, it will be obvious to persons skilled in the art that a number of variations and modifications can be made without departing from the scope of the invention as described herein.

## Claims

1. A system (100) for a user of a host computer (102), to securely provide key credential information to a remote computer (116), with protection against any malware resident in a motherboard (110) of the host computer (102), where the host computer (102) is configured for network communications with a remote computer (116) through a communications network interface (118), the system comprising secure logic circuitry (120) for being disposed in a host computer and a secure user interface , wherein:
(a) the secure logic circuitry (120) is configured for:
(i) detecting a request message indicative of a request for provision of the key credential information from the remote computer (116);
(ii) generating a prompt message for prompting the user for provision of the key credential information;
(iii) transmitting the prompt message to the secure user interface;
(iv) receiving the key credential information from the secure user interface; and,
(v) providing the received key credential information to the remote computer (116) absent processing using the motherboard (110); and,
(b) the secure user interface comprises an enhanced keyboard (126), the secure interface being configured for:
(i) connection to the secure logic circuitry;
(ii) prompting the user for provision of the key credential information;
(iii) receiving the key credential information from the user; and,
(iv) providing the key credential information to the secure logic circuitry (120);
wherein the enhanced keyboard (126) is connected to both the motherboard (110) and to the secure logic circuitry (120) and is activable by the secure logic circuitry (120) to operate in either:
(c) a non-secure mode to transmit keystroke signals from the enhanced keyboard (126) to the motherboard (110); or,
(d) a secure mode to interrupt transmission of keystroke signals from the enhanced keyboard (126) to the motherboard (110); and,
wherein the secure logic circuitry (120) comprises activating means for activating the mode of operation of the enhanced keyboard (126) to the secure mode prior to receiving the key credential information from the user and for activating the mode of operation of the enhanced keyboard (126) to the non-secure mode after the secure logic circuitry (120) has provided the key credential information to the remote computer (116).

2. A system for secure provision of key credential information as defined in claim 1, wherein the request message is associated with a resource of the remote computer (116) and comprises a HTTP 401 Authorization Required message with an embedded realm-title.

3. A system for secure provision of key credential information as defined in claim 2, wherein the enhanced keyboard is configured for use by the user for providing the key credential information, and the secure user interface further comprises a secure display (124) for displaying the embedded realm-title to alert the user as to which key credentials are required for the resource.

4. A system for secure provision of key credential information as defined in claim 1 3, wherein the secure user interface comprises a secure display (124) and secure keyboard (126), the secure user interface comprising a touch screen; and/or the secure user interface is configured for prompting the user by audio means.

5. A system for secure provision of key credential information as defined in claim 2, wherein the secure logic circuitry (120) is adaptable to perform encoding of the key credential information using an encryption technique.

6. A system for secure provision of key credential information as defined in claim 1, wherein the secure logic circuitry (120) interrupts communication between the enhanced keyboard (126) and the motherboard (110) simultaneously upon the prompting of the user.

7. A system for secure provision of key credential information as defined in claim 3, wherein the secure logic circuitry (120) is placed on a network interface card of the communications network interface (118); and, the secure user interface is provided as a peripheral device connected to the network interface card.

8. A system for secure provision of key credential information as defined in any one of claims 1 to 8, wherein the secure logic circuitry (120) comprises a processor (106) and memory (138), the memory having executable commands stored therein for execution on the processor (106).

9. A system for secure provision of key credential information as defined in claim 1, wherein wireless communication is enabled between the secure logic circuitry (120) and the secure user interface.

10. A system for secure provision of key credential information as defined in claim 1 , wherein the activation means is provided by a user-activable switch (128) or by the secure logic circuitry (120) configured for automatically activating the mode of operation.

11. A system for secure provision of key credential information as defined in claim 2, wherein the remote computer (116) comprises a server and the resource is an Internet service.

12. A method for secure provision of key credential information by a user of a host computer (102) against malware resident in a motherboard (110) of the host computer (102), the host computer (102) configured for network communications with a remote computer (116) through a communications network interface (118), the method comprising:
(a) providing a secure user interface comprising an enhanced keyboard (126) configured for receiving the key credential information from the user;
(b) using a secure logic circuitry (120) disposed in a host computer (102) and connected to the secure user interface, detecting a request message indicative of a request for provision of the key credential information from the remote computer (116);
(c) using the secure logic circuitry (120), generating a prompt message for prompting the user for provision of the key credential information using the secure user interface;
(d) using the secure logic circuitry (120), transmitting the prompt message to the secure user interface;
(e) using the enhanced keyboard (126) of the secure user interface, receiving the key credential information from the user and providing the key credential information to the secure logic circuitry (120); and,
(f) using the secure logic circuitry (120), providing the key credential information to the remote computer (116) absent processing using circuitry of the motherboard (110);
wherein the enhanced keyboard (126) of the secure user interface is normally operative for use by the user to provide communications in a non-secure mode from the user to the motherboard (110), the method further comprising interrupting the non-secure mode communications between the enhanced keyboard (126) and the motherboard (110) before prompting the user to provide the key credential information and re-enabling the non-secure mode communications between the enhanced keyboard (126) and the motherboard (110) after providing the received key credential information to the remote computer (116).

13. A method as defined in claim 12, wherein the request message from the remote computer (116) is associated with a resource of the remote computer and comprises a HTTP 401 Authorization Required message with an embedded realm-title, and the embedded realm-title is provided to the user to alert the user as to which key credentials are required for the resource.

14. A method as defined in claim 13, wherein the secure user interface further comprises a secure display (124) and/or the secure user interface is configured for prompting the user by audio means; and, optionally, the secure user interface comprises a touch screen.

15. A method as defined in any one of claims 12-14 wherein wireless communication is enabled between the secure logic circuitry (120) and the secure user interface.

## Patentansprüche

1. System (100) für einen Benutzer eines Host-Computers (102) zur sicheren Bereitstellung von Schlüsselauthentifizierungsinformationen an einen dezentralen Computer (116), mit Schutz vor Schadsoftware welche in einer Hauptplatine (110) des Host-Computers (102) vorhanden ist, wobei der Host-Computer (102) für Netzwerkkommunikationen mit einem dezentralen Computer (116) durch eine Kommunikationsnetzwerkschnittstelle (118) konfiguriert ist, wobei das System eine sichere Logikschaltung (120) aufweist, um in einem Host-Computer bereitgestellt zu sein, und eine sichere Benutzerschnittstelle, wobei:
(a) die sichere Logikschaltung (120) dazu ausgebildet ist:
(i) eine Anfrage-Nachricht zu erfassen, welche auf eine Anfrage zur Bereitstellung der Schlüsselauthentifizierungsinformationen vom dezentralen Computer (116) hindeutet;
(ii) eine Eingabeaufforderung zu erzeugen, um den Benutzer zur Bereitstellung der Schlüsselauthentifizierungsinformationen aufzufordern;
(iii) die Eingabeaufforderung an die sichere Benutzerschnittstelle zu übermitteln;
(iv) die Schlüsselauthentifizierungsinformationen von der sicheren Benutzerschnittstelle zu erhalten;
und,
(v) die erhaltene Schlüsselauthentifizierungsinformationen dem dezentralen Computer (116) bereit zu stellen ohne Verarbeitung unter Verwendung der Hauptplatine (110); und,
(b) die sichere Benutzerschnittstelle eine erweiterte Tastatur (126) aufweist, wobei die sichere Benutzerschnittstelle dazu konfiguriert ist:
(i) mit der sicheren Logikschaltung zu verbinden;
(ii) den Benutzer aufzufordern, die Schlüsselauthentifizierungsinformationen bereit zu stellen;
(iii) die Schlüsselauthentifizierungsinformationen vom Benutzer zu erhalten;
und,
(iv) die Schlüsselauthentifizierungsinformationen der sicheren Logikschaltung (120) bereit zu stellen;
wobei die erweiterte Tastatur (126) sowohl mit der Hauptplatine (110) und der sicheren Logikschaltung (120) verbunden ist und durch die sichere Logikschaltung (120) aktivierbar ist um in einem von beidem betrieben zu sein:
(c) in einem unsicheren Modus, um Tastendrucksignale von der erweiterten Tastatur (126) an die Hauptplatine (110) zu übermitteln; oder,
(d) in einem sicheren Modus, um die Übermittlung von Tastendrucksignalen von der erweiterten Tastatur (126) an die Hauptplatine (110) zu unterbrechen; und
wobei die sichere Logikschaltung (120) Aktivierungsmittel zur Aktivierung des Betriebsmodus der erweiterten Tastatur (126) in den sicheren Modus vor dem Erhalt der Schlüsselauthentifizierungsinformationen vom Benutzer, und zur Aktivierung des Betriebsmodus der erweiterten Tastatur (126) in den unsicheren Modus nachdem die sichere Logikschaltung (120) die Schlüsselauthentifizierungsinformationen dem dezentralen Computer (116) bereit gestellt hat, aufweist.

2. System zur sicheren Bereitstellung von Schlüsselauthentifizierungsinformationen gemäss Anspruch 1, wobei die Anfrage-Nachricht einer Ressource des dezentralen Computers (116) zugeordnet ist und eine HTTP 401 Autorisierung Erforderlich Nachricht mit einem eingebetteten Bereichstitel aufweist.

3. System zur sicheren Bereitstellung von Schlüsselauthentifizierungsinformationen gemäss Anspruch 2, wobei die erweiterte Tastatur dazu konfiguriert ist, von einem Benutzer verwendet zu werden um die Schlüsselauthentifizierungsinformationen bereit zu stellen, und die sichere Benutzerschnittstelle weiter eine sichere Anzeige (124) zur Anzeige des eingebetteten Bereichstitels aufweist, um den Benutzer darauf aufmerksam zu machen, welche Schlüsselauthentifizierungen für die Ressource benötigt werden.

4. System zur sicheren Bereitstellung von Schlüsselauthentifizierungsinformationen gemäss Anspruch 3, wobei die sichere Benutzerschnittstelle eine sichere Anzeige (124) und eine sichere Tastatur (126) aufweist, wobei die sichere Benutzerschnittstelle einen Berührungsbildschirm aufweist; und / oder wobei die sichere Benutzerschnittstelle dazu konfiguriert ist, den Benutzer mittels akustischen Mitteln aufzufordern.

5. System zur sicheren Bereitstellung von Schlüsselauthentifizierungsinformationen gemäss Anspruch 2, wobei die sichere Logikschaltung (120) adaptierbar ist, um eine Verschlüsselung der Schlüsselauthentifizierungsinformationen mittels einer Verschlüsselungstechnik durchzuführen.

6. System zur sicheren Bereitstellung von Schlüsselauthentifizierungsinformationen gemäss Anspruch 1, wobei die sichere Logikschaltung (120) die Kommunikation zwischen der erweiterten Tastatur (126) und der Hauptplatine (110) nach der Aufforderung des Benutzers gleichzeitig unterbricht.

7. System zur sicheren Bereitstellung von Schlüsselauthentifizierungsinformationen gemäss Anspruch 3, wobei die sichere Logikschaltung (120) auf einer Netzwerkschnittstellenkarte der Kommunikationsnetzwerkschnittstelle (118) platziert ist; und, wobei die sichere Benutzerschnittstelle als ein Peripheriegerät, welches mit der Netzwerkschnittstellenkarte verbunden ist, bereit gestellt ist.

8. System zur sicheren Bereitstellung von Schlüsselauthentifizierungsinformationen gemäss einem der Ansprüche 1 bis 8, wobei die sichere Logikschaltung (120) einen Prozessor (106) und einen Speicher (138) aufweist, wobei der Speicher ausführbare Befehle zur Ausführung auf dem Prozessor (106) darin gespeichert hat.

9. System zur sicheren Bereitstellung von Schlüsselauthentifizierungsinformationen gemäss Anspruch 1, wobei eine drahtlose Kommunikation zwischen der sicheren Logikschaltung (120) und der sicheren Benutzerschnittstelle ermöglicht ist.

10. System zur sicheren Bereitstellung von Schlüsselauthentifizierungsinformationen gemäss Anspruch 1, wobei die Aktivierungsmittel durch einen Benutzer-aktivierbaren Schalter (128) oder durch die sichere Logikschaltung (120), welche für eine automatische Aktivierung des Betriebsmodus konfiguriert sind, bereit gestellt werden.

11. System zur sicheren Bereitstellung von Schlüsselauthentifizierungsinformationen gemäss Anspruch 2, wobei der dezentrale Computer (116) einen Server aufweist und die Ressource ein Internet-Service ist.

12. Verfahren zur sicheren Bereitstellung von Schlüsselauthentifizierungsinformationen durch einen Benutzer eines Host-Computers (102) gegen Schadsoftware, welche in einer Hauptplatine (110) des Host-Computers (102) vorhanden ist, wobei der Host-Computer (102) für Netzwerkkommunikationen mit einem dezentralen Computer (116) durch eine Kommunikationsnetzwerkschnittstelle (118) konfiguriert ist, wobei das Verfahren aufweist:
(a) Bereitstellen einer sicheren Benutzerschnittstelle, welche eine erweiterte Tastatur (126), welche für das Erhalten der Schlüsselauthentifizierungsinformationen vom Benutzer konfiguriert ist, aufweist;
(b) Verwenden einer sicheren Logikschaltung (120), welche in einem Host-Computer (102) bereitgestellt und mit der sicheren Benutzerschnittstelle verbunden ist, Erfassen einer Anfrage-Nachricht, welche auf eine Anfrage zur Bereitstellung der Schlüsselauthentifizierungsinformationen vom dezentralen Computer (116) hindeutet;
(c) Verwenden der sicheren Logikschaltung (120), Erzeugen einer Eingabeaufforderung zur Aufforderung des Benutzers, die Schlüsselauthentifizierungsinformationen mittels der sicheren Benutzerschnittstelle bereitzustellen;
(d) Verwenden der sicheren Logikschaltung (120), Übermitteln der Eingabeaufforderung an die Benutzerschnittstelle;
(e) Verwenden der erweiterten Tastatur (126) der sicheren Benutzerschnittstelle, Erhalten der Schlüsselauthentifizierungsinformationen vom Benutzer und Bereitstellen der Schlüsselauthentifizierungsinformationen an die sichere Logikschaltung (120); und,
(f) Verwenden der sicheren Logikschaltung (120), Bereitstellen der Schlüsselauthentifizierungsinformationen an den dezentralen Computer (116) ohne Verarbeitung unter Verwendung von Schaltungen der Hauptplatine (110);
wobei die erweiterte Tastatur (126) der sicheren Benutzerschnittstelle üblicherweise für die Verwendung durch den Benutzer, Kommunikationen in einem unsicheren Betrieb vom Benutzer an die Hauptplatine (110) bereit zu stellen, betriebsfähig ist, wobei das Verfahren weiter eine Unterbrechung des unsicheren Kommunikationsmodus zwischen der erweiterten Tastatur (126) und der Hauptplatine (110) vor dem Anfragen des Benutzers die Schlüsselauthentifizierungsinformationen bereitzustellen, und eine Aufhebung des unsicheren Kommunikationsmodus zwischen der erweiterten Tastatur (126) und der Hauptplatine (110) nach dem Bereitstellen der erhaltenen Schlüsselauthentifizierungsinformationen an den dezentralen Computer (116), aufweist.

13. Verfahren gemäss Anspruch 12, wobei die Anfrage-Nachricht vom dezentralen Computer (116) einer Ressource des dezentralen Computers zugeordnet ist und eine HTTP 401 Autorisierung Erforderlich Nachricht mit einem eingebetteten Bereichstitel aufweist, und wobei der eingebettete Bereichstitels dem Benutzer bereitgestellt wird, um den Benutzer darauf aufmerksam zu machen, welche Schlüsselauthentifizierungen für die Ressource benötigt werden.

14. Verfahren gemäss Anspruch 13, wobei die sichere Benutzerschnittstelle weiter eine sichere Anzeige (124) aufweist und / oder die sichere Benutzerschnittstelle dazu konfiguriert ist, den Benutzer mittels akustischen Mitteln aufzufordern; und, optional, die sichere Benutzerschnittstelle einen Berührungsbildschirm aufweist.

15. Verfahren gemäss einem der Ansprüche 12-14, wobei eine drahtlose Kommunikation zwischen der sicheren Logikschaltung (120) und der sicheren Benutzerschnittstelle ermöglicht ist.

## Revendications

1. Un système (100) pour un utilisateur d'un ordinateur hôte (102), pour fournir de manière sécurisée des informations de justificatif d'identité à clef à un ordinateur distant (116), avec protection contre tout maliciel résidant dans une carte mère (110) de l'ordinateur hôte (102), dans lequel l'ordinateur hôte (102) est configuré pour la communication par réseau avec un ordinateur distant (116) à travers un interface de réseau de communication (118), le système comprenant un circuit logique sécurisé (120) pour être disposé dans un ordinateur hôte et un interface utilisateur sécurisé, dans lequel :
a. le circuit logique sécurisé (120) étant configuré pour :
i. détecter un message requête d'un ordinateur distant (116) indiquant une requête pour fournir l'information de justificatif d'identité à clef ;
ii. générer un message invitation pour inviter l'utilisateur à fournir les informations de justificatif d'identité à clef ;
iii. transmettre le message invitation à l'interface utilisateur sécurisé ;
iv. recevoir l'information de justificatif d'identité à clef de l'interface utilisateur sécurisé, et ;
v. fournir l'information de justificatif d'identité à clef reçue à l'ordinateur distant (116) sans traitement utilisant la carte mère (110) ; et,
b. l'interface utilisateur sécurisé comprend un clavier étendu (126), l'interface utilisateur sécurisé étant configuré pour :
i. une connexion au circuit logique sécurisé ;
ii. inviter l'utilisateur à fournir l'information de justificatif d'identité à clef ;
iii. recevoir l'information de justificatif d'identité à clef de l'utilisateur ; et,
iv. fournir l'information de justificatif d'identité à clef au circuit logique sécurisé (120) ;
dans lequel le clavier étendu (126) est connecté à de part et d'autre à la carte mère (110) et au circuit logique sécurisé (120) et est activable par le circuit logique sécurisé (120) pour fonctionner ou bien en
c. mode non sécurisé pour transmettre les signaux de frappe depuis le clavier étendu (126) vers la carte mère (110) ; ou en
d. mode sécurisé pour interrompre la transmission de signaux de frappe depuis le clavier étendu (126) vers la carte mère (110) ; et
dans lequel le circuit logique sécurisé (120) comprend un moyen d'activation pour activer le mode de fonctionnement du clavier étendu (126) vers le mode sécurisé avant de recevoir l'information de justificatif d'identité à clef de l'utilisateur et pour activer le mode de fonctionnement du clavier étendu (126) vers le mode non sécurisé après que le circuit logique sécurisé (120) a fourni l'information de justificatif d'identité à clef à l'ordinateur distant (116).

2. Un système pour fournir de l'information de justification d'identité à clef de manière sécurisée comme défini dans la revendication 1, dans lequel le message requête est associé avec une ressource de l'ordinateur distant (116) et comprend un message « HTTP 401 autorisation requise » avec un titre de domaine embarqué.

3. Un système pour fournir de l'information de justificatif d'identité à clef de manière sécurisée comme défini dans la revendication 2, dans lequel le clavier étendu est configuré pour utilisation par un utilisateur pour fournir l'information de justificatif d'identité à clef, et l'interface utilisateur sécurisé comprend d'avantage un écran sécurisé (124) pour afficher le titre de domaine embarqué pour alerter l'utilisateur sur le justificatif d'identité à clef requis pour la ressource.

4. Un système pour fournir de l'information de justificatif d'identité à clef de manière sécurisée comme défini dans la revendication 3, dans lequel l'interface utilisateur sécurisé comprend un écran sécurisé (124) et un clavier (126), l'interface utilisateur sécurisé comprenant un écran tactile ; et/ou l'interface utilisateur sécurisé est configuré pour inviter l'utilisateur par moyen audio.

5. Un système pour fournir de l'information de justificatif d'identité à clef de manière sécurisée comme défini dans la revendication 2, dans lequel le circuit logique sécurisé est adaptable pour effectuer l'encodage de l'information de justificatif d'identité à clef en utilisant une technique d'encryptage.

6. Un système pour fournir de l'information de justificatif d'identité à clef de manière sécurisée comme défini dans la revendication 1, dans lequel le circuit logique sécurisé (120) interrompt la communication entre le clavier étendu (126) et la carte mère (110) de manière simultanée lors de l'invitation de l'utilisateur.

7. Un système pour fournir de l'information de justificatif d'identité à clef de manière sécurisée comme défini dans la revendication 3, dans lequel le circuit logique sécurisé (120) est placé sur une carte d'interface de réseau de l'interface de réseau de communication (118), et l'interface utilisateur sécurisé est prévu comme périphérique connecté à la carte d'interface de réseau.

8. Un système pour fournir de l'information de justificatif d'identité à clef de manière sécurisée comme défini dans l'une quelconque des revendications 1 à 8, dans lequel le circuit logique sécurisé (120) comprend un processeur (106) et une mémoire (138), la mémoire ayant des commandes exécutables enregistrées sur elle pour exécution sur le processeur (106).

9. Un système pour fournir de l'information de justificatif d'identité à clef de manière sécurisée comme défini dans la revendication 1, dans lequel la communication sans fil entre le circuit logique sécurisé (120) et l'interface utilisateur sécurisé est activée.

10. Un système pour fournir de l'information de justificatif d'identité à clef de manière sécurisée comme défini dans la revendication 1, dans lequel le moyen d'activation est prévu par un interrupteur activable (128) ou par circuit logique sécurisé (120) configuré pour automatiquement activer le mode de fonctionnement.

11. Un système pour fournir de l'information de justificatif d'identité à clef de manière sécurisée comme défini dans la revendication 2, dans lequel l'ordinateur distant (116) comprend un serveur et la ressource est un service internet.

12. Un procédé pour fournir de l'information de justificatif d'identité à clef de manière sécurisée par un utilisateur d'un ordinateur hôte (102) contre un maliciel résidant dans une carte mère (110) de l'ordinateur hôte (102), l'ordinateur hôte (102) étant configuré pour la communication par réseau avec un ordinateur distant (116) à travers un interface de réseau de communication (118), le procédé comprenant :
a) fournir une interface utilisateur sécurisé comprenant un clavier étendu (126) configuré pour recevoir l'information de justificatif d'identité à clef de l'utilisateur ;
b) utiliser un circuit logique sécurisé (120) disposé dans un ordinateur hôte (102) et connecté à l'interface utilisateur sécurisé, détecter un message requête d'un ordinateur distant (116) indiquant une requête pour fournir l'information de justificatif d'identité à clef ;
c) utiliser le circuit logique sécurisé (120), générer un message invitation pour inviter l'utilisateur à fournir l'information de justificatif d'identité à clef en utilisant l'interface utilisateur sécurisé ;
d) utiliser le circuit logique sécurisé (120), transmettre le message invitation à l'interface utilisateur sécurisé ;
e) utiliser le clavier étendu de l'interface utilisateur sécurisé, recevoir l'information de justificatif d'identité à clef de l'utilisateur et fournir l'information de justificatif d'identité à clef au circuit logique sécurisé (120) ; et
f) utiliser le circuit logique sécurisé (120), fournir l'information de justificatif d'identité à clef à l'ordinateur distant (116) sans traitement utilisant les circuits de la carte mère (110) ;
dans lequel le clavier étendu (126) de l'interface l'utilisateur sécurisé est normalement opérationnel pour utilisation par l'utilisateur pour fournir des communications en mode non sécurisé depuis l'utilisateur vers la carte mère (110), le procédé comprenant d'avantage interrompre des communications en mode non sécurisé entre le clavier étendu (126) et la carte mère (110) avant d'inviter l'utilisateur à fournir l'information de justificatif d'identité à clef et réactiver les communications en mode non sécurisé entre le clavier étendu (126) et la carte mère (110) après que l'information de justificatif d'identité à clef reçue est fournie à l'ordinateur distant (116).

13. Un procédé comme défini dans la revendication 12, dans lequel le message requête de l'ordinateur distant (116) est associé avec une ressource de l'ordinateur distant et comprenant un message « HTTP 401 autorisation requise » avec un titre de domaine embarqué, et le titre de domaine embarqué est fourni à l'utilisateur pour alerter l'utilisateur sur le justificatif d'identité à clef requis pour la ressource.

14. Un procédé comme défini dans la revendication 13, dans lequel l'interface utilisateur sécurisé comprenant d'avantage un écran sécurisé (124) et/ou l'interface utilisateur sécurisé est configuré pour inviter l'utilisateur par moyen audio ; et, optionnellement, l'interface utilisateur sécurisé comprend un écran tactile.

15. Un procédé comme défini dans l'une quelconque des revendications 12 à 14 dans lequel la communication sans fil entre le circuit logique sécurisé (120) et l'interface utilisateur sécurisé est activée.
